# EUROPÄISCHE PATENTANMELDUNG

(11) **EP 4 043 282 A1**
(43) Veröffentlichungstag der Anmeldung: **17.08.2022**
(21) Anmeldenummer: 21157301.9
(22) Anmeldetag: 16.02.2021
(51) Int. Cl.: B60Q 1/00, B60Q 1/26, F21S 43/16, F21S 43/30, F21S 43/33, F21S 45/10

(54) **FAHRZEUGPARTIE UND EINE SOLCHE AUFWEISENDES FAHRZEUG**

(71) Anmelder: odelo GmbH, 70329 Stuttgart (DE)
(72) Erfinder: BRÄUNLING, Lisa, 70372 Stuttgart (DE); HORNUNG, Thorsten, 73760 Ostfildern (DE); KARLOVIC, Kristian, 73529 Schwäbisch Gmünd (DE); VOLLMER, Marco, 73728 Esslingen am Neckar (DE); WILD, Julian, 70327 Stuttgart (DE)
(74) Vertreter: Benninger, Johannes

(57) **Zusammenfassung**

Es wird eine Fahrzeugpartie (01) umfassend mindestens eine Fahrzeugleuchte (02) mit einem von einem Leuchtengehäuse (03) mit mindestens einer von wenigstens einer Lichtscheibe (04) abgedeckten Lichtöffnung umschlossenen Leuchteninnenraum (05) beschrieben. Der Leuchteninnenraum (05) beherbergt Projektionsmittel (06) zur Projektion zumindest einer zur Erfüllung wenigstens einer gesetzlich zur Teilnahme am Straßenverkehr vorgeschriebenen Lichtfunktion. Die Fahrzeugpartie (01) zeichnet sich aus durch eine außerhalb des Leuchteninnenraums (05) angeordnete Projektionsfläche (07). Die Projektionsfläche (07) wird mit Licht der Projektionsmittel (06) in einer vorgegebene Flächenanforderung für die jeweilige Lichtfunktion erfüllenden Ausdehnung angestrahlt. Die Projektionsfläche (07) lenkt das Licht der Projektionsmittel (06) gemäß einer für die jeweilige Lichtfunktion vorgegebenen Lichtverteilung um.

## Beschreibung

Die Erfindung betrifft eine Fahrzeugpartie gemäß dem Oberbegriff des Anspruchs 1.

Die Erfindung beschäftigt sich mit einer Vergrößerung der Leuchtfläche einer beispielsweise zur Teilnahme eines Fahrzeugs am Straßenverkehr vorgeschriebenen Lichtfunktion einer Fahrzeugleuchte, frei von einem zusätzlichen Bauraumbedarf durch die Fahrzeugleuchte.

Insbesondere beschäftigt sich die Erfindung mit einer Vergrößerung der Leuchtfläche einer Lichtfunktion, ohne Vergrößerung des Leuchtenbauraums, einhergehend mit einer Verbesserung der Sicht- und Wahrnehmbarkeit von Lichtfunktionen einer die Lichtfunktion erfüllenden Fahrzeugleuchte, insbesondere einer Heckleuchte für ein Kraftfahrzeug.

Eine Fahrzeugleuchte umfasst beispielsweise einen im Wesentlichen von einem Leuchtengehäuse mit mindestens einer Lichtöffnung und einer diese verschließenden Lichtscheibe umschlossenen Leuchteninnenraum und mindestens ein darin beherbergtes, mindestens eine Lichtquelle umfassendes Leuchtmittel für wenigstens eine Lichtfunktion der Fahrzeugleuchte.

Beispiele für Fahrzeugleuchten sind am Fahrzeugbug, an den Fahrzeugflanken und/oder an den Seitenspiegeln sowie am Fahrzeugheck angeordnete Wiederholblinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Jede Fahrzeugleuchte erfüllt je nach Ausgestaltung eine oder mehrere Aufgaben bzw. Funktionen. Zur Erfüllung jeder Aufgabe bzw. Funktion ist eine Lichtfunktion der Fahrzeugleuchte vorgesehen. Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Schluss- oder Rücklichtfunktion, zur Sicherstellung einer Sichtbarkeit des Fahrzeugs bei Tag und/oder Nacht, wie etwa bei einer Ausgestaltung als Heckleuchte oder Tagfahrleuchte.

Jede Fahrzeugleuchte weist zur Erfüllung einer oder mehrerer Lichtfunktionen eine beispielsweise durch die Lichtscheibe und/oder von dieser verschlossenen Lichtöffnung begrenzte maximale Leuchtfläche auf, innerhalb der die verschiedenen Lichtfunktionen aufleuchten.

Für die einzelnen Lichtfunktionen gibt es dabei verschiedene Regelungen und Vorschriften, die zu beachten sind.

So muss jede zur Teilnahme eines zulassungspflichtigen Fahrzeugs am Straßenverkehr vorgeschriebene Lichtfunktion beispielsweise eine gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest.

Eine weitere Vorschrift betrifft eine so genannte Mindestleuchtfläche zumindest für bestimmte, besonders sicherheitsrelevante Lichtfunktionen.

Die Mindestleuchtfläche legt für eine von einer Regelung oder Vorschrift betroffene Lichtfunktion fest, wie groß die Leuchtfläche beziehungsweise der von der betroffenen Lichtfunktion eingenommene Teil der Leuchtfläche mindestens sein muss.

In Verbindung mit Regelungen und Vorschriften betreffend die Mindestleuchtfläche findet häufig stellvertretend der Begriff Flächenanforderung Verwendung. Im Folgenden wird daher der Begriff Flächenanforderung alternativ oder zusätzlich zum Begriff Mindestleuchtfläche verwendet, wobei beide Begriffe den gleichen Sachverhalt beschreiben.

Beispielsweise aus aerodynamischen Gründen, aber auch aus Gründen einer Bauraum- und Gewichtseinsparung geht ein großer Trend hin zu kleineren, beispielsweise flacheren Lichtlösungen am Fahrzeug. Schmale Formgestaltungen für Fahrzeugscheinwerfer und -leuchten wird es in Zukunft vermehrt geben. Dieser Trend ist auch bereits in aktuellen Fahrzeugen angekommen.

Eine Begrenzung erfährt dieser Trend bislang durch Regelungen und Vorschriften die Mindestleuchtfläche betreffend. So legt beispielsweise der Federal Motor Vehicle Safety Standard (FMVSS) in den Vereinigten Staaten und der Internationale Verband der Automobilingenieure (SAE; Society of Automotive Engineers) für eine Wiederholblinklichtfunktion zur Fahrtrichtungsanzeige (FRA) und für eine Bremslichtfunktion (BRL) eine Flächenanforderung von mindestens fünfzig Quadratzentimetern für die von diesen Lichtfunktionen eingenommenen effektiven Leuchtflächen als Mindestleuchtflächen fest.

Dabei bezieht sich die effektive Leuchtfläche auf eine Projektionsfläche (Effective Projected Luminous Lens Area; EPLLA). Die Projektionsfläche liegt dabei innerhalb einer Ebene, die beispielsweise unter einem vorgegebenen Winkel zu einer Blickachse liegt. Beispielsweise kann die Blickachse normal auf der Ebene aufstehen. Beispielsweise verläuft die Blickachse horizontal parallel zur Längsachse eines Fahrzeugs.

Die Flächenanforderung kann grundsätzlich auch vermittels mehrerer Teil-Leuchtflächen in mehreren Leuchtenkammern erfüllt werden. Dabei muss jede Teil-Leuchtfläche eine EPLLA von mindestens zweiundzwanzig Quadratzentimetern aufweisen. Ferner dürfen die Teil-Leuchtflächen nicht beliebig weit voneinander entfernt am Fahrzeug angeordnet sein.

Hieraus ergibt sich, sollte eine Mehrkammer-Ansteuerung nach FMVSS/SAE gewählt werden, dass jede Teil-Leuchtfläche mindestens zweiundzwanzig Quadratzentimeter aufweisen muss. Bei einer Einkammer-Ansteuerung, wie etwa bei einer Komplettabschaltung der Funktion im Fehlerfall entfällt dieser Punkt, dann sind in jedem Fall die fünfzig Quadratzentimeter als Mindestleuchtfläche einzuhalten.

Zur Erfüllung der Flächenanforderungen beispielsweise nach FMVSS müssen bisher Fahrzeugleuchten mit entsprechend großen Lichtöffnungen und/oder Lichtscheiben entwickelt und verwendet werden. Alternativ oder zusätzlich ist zur Erfüllung der Flächenanforderungen bekannt Lichtfunktionsflächen zusammenzuschließen, sodass beispielsweise bei einem BRL und/oder FRA auch derjenige Teil einer Leuchtfläche mit aufleuchtet, der für eine Schlusslichtfunktion (SL) vorgesehen ist, um in der Summe gesamtheitlich auf die geforderte Mindestleuchtfläche für die jeweilige Lichtfunktion zu kommen.

Jedoch stellen auch hier die Flächenanforderungen an die Leuchtflächen von Lichtfunktionen eine bis dato nicht unterschreitbare Untergrenze dar. Mit anderen Worten sind die kleinsten möglichen Abmessungen einer Fahrzeugleuchte daher bis dato durch die Flächenanforderungen begrenzt.

Durch EP 2 503 222 A1 ist eine Fahrzeugleuchte mit einer beim Blick von außen durch ihre Lichtscheibe hindurch sichtbaren Projektionsfläche bekannt. Die Fahrzeugleuchte umfasst mindestens ein Mittel zur variablen Projektion der momentan benötigten einen oder mehreren Lichtfunktionen auf den durch die Lichtscheibe hindurch sichtbaren Teil der Projektionsfläche.

Durch DE 10 2015 220 543 A1 ist eine Fahrzeugleuchte mit einer in deren Leuchteninnenraum angeordneten Projektionsfläche und mit einem ebenfalls in dem Leuchteninnenraum beherbergten Projektor bekannt, der in einem auf Seite der Innenseite der Lichtscheibe gespiegelten Strahlengang eine oder mehrere momentan benötigte Lichtfunktionen auf die Projektionsfläche projiziert.

Durch EP 3 428 901 A1 ist bekannt, eine in einer momentanen Verkehrssituation potentiell gefährdete Person durch Ausgabe einer zumindest eine auf die Gefährdung hinweisende Darstellung umfassenden Information durch Projektion mindestens eines die Darstellung wiedergebenden Bilds mittels mindestens einem in wenigstens einer Fahrzeugleuchte eines eigenen Fahrzeugs beherbergter Projektionsmittel auf eine Fläche in der Nähe des eigenen Fahrzeugs zu warnen. 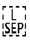

Durch EP 3 677 831 A1 ist bekannt, zum Erhalt einer Mindestleuchtfläche eine Leuchtfläche vermittels eines im Leuchteninnenraum geneigt angeordneten, die Leuchtfläche um ihre abbildungsgetreue Spiegelung zu einer Gesamtleuchtfläche ergänzenden Spiegels zu vergrößern.

Eine Aufgabe der Erfindung ist eine Fahrzeugpartie mit einer in diese integrierten Fahrzeugleuchte bereitzustellen, frei von einer Verletzung einer Flächenanforderung hinsichtlich Mindestleuchtfläche einer von der Fahrzeugleuchte erfüllten Lichtfunktion.

Die Aufgabe wird gelöst durch die Merkmale des unabhängigen Anspruchs.

Um die Einschränkungen des Standes der Technik frei von einer Verletzung der Flächenanforderungen zu umgehen, wird erfindungsgemäß vorgeschlagen, eine Projektionsfläche außerhalb eines von einer Lichtscheibe und einem Leuchtengehäuse umschlossenen Leuchteninnenraums einer Fahrzeugleuchte vorzusehen, auf welche im Leuchteninnenraum angeordnete Projektionsmittel zumindest einen Teil einer Lichtfunktion projizieren. Die Projektionsfläche ist so angeordnet, dass sie das von den Projektionsmitteln erzeugte Bild der Lichtfunktion gemäß einer für die jeweilige Lichtfunktion vorgesehenen Lichtverteilung umlenkt.

Die Erfindung betrifft demnach eine Fahrzeugpartie eines Fahrzeugs mit mindestens einer Fahrzeugleuchte zur Erfüllung wenigstens einer gesetzlich zur Teilnahme am Straßenverkehr vorgeschriebenen Lichtfunktion, welche Fahrzeugleuchte einen von einer Lichtscheibe und einem Leuchtengehäuse wenigstens zum Teil umschlossenen Leuchteninnenraum aufweist, welcher Leuchteninnenraum Projektionsmittel zur Projektion einer Lichtfunktion beherbergt. Die Fahrzeugpartie zeichnet sich aus durch eine außerhalb des Leuchteninnenraums der Fahrzeugleuchte am Fahrzeug, genauer an der Fahrzeugpartie, angeordnete Projektionsfläche, welche von den Projektionsmitteln mit Licht der Projektionsmittel in einer vorgegebene Flächenanforderungen für die Lichtfunktion erfüllenden Ausdehnung angestrahlt wird, und welche das Licht der Projektionsmittel gemäß einer für die jeweilige Lichtfunktion vorgegebenen Lichtverteilung umlenkt.

Es ist ersichtlich, dass die Erfindung eine Vergrößerung der Leuchtfläche einer Lichtfunktion frei von einer Vergrößerung des Leuchtenbauraums schafft, einhergehend mit einer Verbesserung der Sicht- und Wahrnehmbarkeit von Lichtfunktionen einer Fahrzeugleuchte, insbesondere Heckleuchte für ein Kraftfahrzeug.

Über eine vollständige Lösung der der Erfindung zu Grunde liegenden Aufgabe hinausgehende Vorteile gegenüber dem Stand der Technik sind unter Anderem, dass vermittels der Erfindung Fahrzeugleuchten und damit deren Bauraumanforderungen frei von einer Verletzung der einschlägigen Regelungen und Vorschriften bezüglich Flächenanforderungen wesentlich verkleinert werden können, ohne dass die für die einzelnen Lichtfunktionen zur Verfügung stehenden, von den anderen Verkehrsteilnehmern wahrnehmbaren Mindestleuchtflächen unterschritten werden.

Damit werden auch die von den anderen Verkehrsteilnehmer wahrnehmbaren Leuchtflächen im Vergleich zum Stand der Technik nicht kleiner.

Die Projektionsfläche kann Teil der Fahrzeugleuchte sein, oder sie kann eine Karosseriefläche umfassen. Auch Kombinationen sind denkbar.

Die Projektionsfläche kann allein oder in Kombination mit einer innerhalb des Leuchteninnenraums angeordneten Leuchtfläche die Flächenanforderungen für eine oder mehrere Lichtfunktionen erfüllen.

Es ist ersichtlich, dass die Erfindung eine Erfüllung von Flächenanforderungen durch ein Projektionssystem vorsieht.

Die Erfindung bietet eine Möglichkeit die durch den einleitend beschriebenen Trend entstehenden Herausforderung zu lösen und Fahrzeugleuchten noch kleiner bauen zu können. Hierzu wird ein optisches Projektionssystem vorgeschlagen. Dieses kann vorzugsweise in einer Fahrzeugleuchte verbaut sein und hieraus auf ihr Umfeld Licht projizieren. Das Umfeld dient dann als zusätzliche Leuchtfläche und kann ein entsprechend gestaltetes Fahrzeugblech sein oder ein Teil der Heckleuchte, wie etwa ein Kunststoffteil in weiß, das aber außerhalb der Lichtscheibe liegt und so als Fahrzeugblechersatz und Projektionsfläche verwendet werden kann. Dieses bestrahlte Umfeld wird als Leuchtfläche der Funktion verwendet und vergrößert somit die der Lichtfunktion zur Verfügung stehende Gesamtleuchtfläche. Hierdurch wird sowohl eine schmale Fahrzeugleuchte entsprechend den einschlägigen Trends und Kundenwünschen erhalten, als auch die Flächenanforderungen hinsichtlich Mindestleuchtflächen von Lichtfunktionen entsprechend den gesetzlichen Anforderungen eingehalten.

Darüber hinaus dient eine vergrößerte Leuchtfläche, unabhängig von der gesetzlichen Anforderung, der Verkehrssicherheit, da hierdurch die Lichtfunktion besser erkannt und darauf reagiert werden kann.

Die Erfindung kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen.

Zusätzliche, über die vollständige Lösung der gestellten Aufgabe und/oder über die voran zu den einzelnen Merkmalen genannten Vorteile hinausgehende Vorteile gegenüber dem Stand der Technik sind nachfolgend aufgeführt.

Ferner wird die Erfindung nachfolgend anhand von in der Zeichnung dargestellter Ausführungsbeispiele näher erläutert. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar. Es zeigen in schematischer Darstellung:

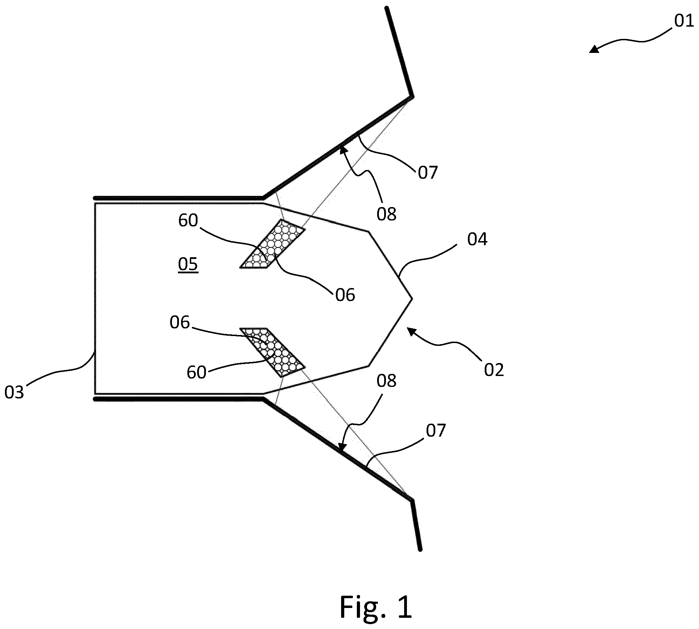

- Fig. 1: ein Ausführungsbeispiel einer Fahrzeugpartie in einem Querschnitt.

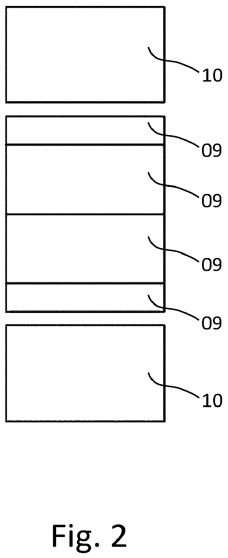

- Fig. 2: ein erstes Ausführungsbeispiel einer Ausleuchtung einer sich aus der Projektionsfläche und einer im Leuchteninnenraum angeordneten Teil-Leuchtfläche zusammensetzenden Gesamt-Leuchtfläche der Fahrzeugpartie aus Fig. 1 in einer Draufsicht auf die Gesamt-Leuchtfläche in einer Blickrichtung entsprechend der effektiven Leuchtfläche.

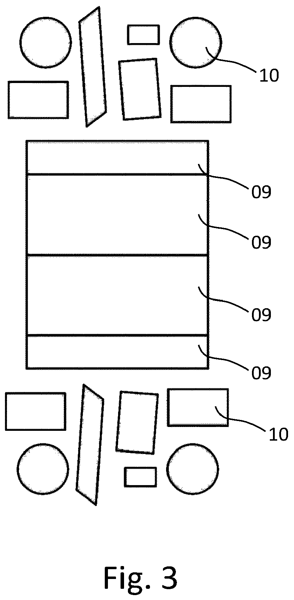

- Fig. 3: ein zweites Ausführungsbeispiel einer Ausleuchtung einer sich aus der Projektionsfläche und einer im Leuchteninnenraum angeordneten Teil-Leuchtfläche zusammensetzenden Gesamt-Leuchtfläche der Fahrzeugpartie aus Fig. 1 in einer Draufsicht auf die Gesamt-Leuchtfläche in einer Blickrichtung entsprechend der effektiven Leuchtfläche.

Eine in Fig. 1, Fig. 2, Fig. 3 ganz oder in Teilen dargestellte Fahrzeugpartie 01 eines Fahrzeugs umfasst mindestens eine Fahrzeugleuchte 02 mit einem von einem Leuchtengehäuse 03 mit mindestens einer von wenigstens einer Lichtscheibe 04 abgedeckten Lichtöffnung umschlossenen Leuchteninnenraum 05.

Der Leuchteninnenraum 05 beherbergt zur zumindest zeitweiligen Emission von Licht zumindest in einer für eine Lichtfunktion vorgeschriebenen Lichtfarbe geeignete Projektionsmittel 06.

Die Projektionsmittel 06 dienen zur Projektion zumindest einer zur Erfüllung wenigstens einer gesetzlich zur Teilnahme am Straßenverkehr vorgeschriebenen Lichtfunktion.

Die Fahrzeugpartie 01 umfasst mindestens eine aus Sicht des Leuchteninnenraums 05 gesehen außerhalb der Lichtscheibe 04, außerhalb des Leuchteninnenraums 05 der Fahrzeugleuchte 02 am Fahrzeug als Teil der Fahrzeugpartie 01 angeordnete Projektionsfläche 07.

Die Projektionsfläche 07 wird mit Licht der Projektionsmittel 06 in einer vorgegebene Flächenanforderung für die jeweilige Lichtfunktion erfüllenden Ausdehnung angestrahlt.

Die Projektionsfläche 07 lenkt das Licht der Projektionsmittel 06 gemäß einer für die jeweilige Lichtfunktion vorgegebenen Lichtverteilung um.

Die Erfindung umgeht damit vermittels einer Projektionsfläche 07 außerhalb eines von einer Lichtscheibe 04 und einem Leuchtengehäuse 03 umschlossenen Leuchteninnenraums 05 einer Fahrzeugleuchte 02, auf welche im Leuchteninnenraum 05 angeordnete Projektionsmittel 06 zumindest einen Teil einer Lichtfunktion projizieren, die Einschränkungen des Standes der Technik frei von einer Verletzung der Flächenanforderungen für zur Teilnahme am Straßenverkehr vorgeschriebene Lichtfunktionen.

Damit werden auch die von den anderen Verkehrsteilnehmer wahrnehmbaren Leuchtflächen im Vergleich zum Stand der Technik nicht kleiner, wenn die Lichtscheibe 04 und damit auch die Lichtöffnung einer Fahrzeugleuchte 02 kleiner ausgeführt werden, als die durch eine Flächenanforderung vorgegebene Mindestleuchtfläche für eine Lichtfunktion.

Die Projektionsfläche 07 ist so angeordnet, dass sie das von den Projektionsmitteln 06 erzeugte Bild der Lichtfunktion gemäß einer für die jeweilige Lichtfunktion vorgesehenen Lichtverteilung umlenkt.

Die Abmessungen der Projektion der jeweiligen Lichtfunktion auf die Projektionsfläche 07 sind dabei so bemessen, dass die Flächenanforderungen erfüllt sind.

Damit ist die Erfindung regelungstechnisch zulassungsfähig.

Vorteile gegenüber dem Stand der Technik sind eine annähernd beliebige Vergrößerung der Leuchtfläche einer Lichtfunktion frei von einer Vergrößerung des Leuchtenbauraums, einhergehend mit einer Verbesserung der Sicht- und Wahrnehmbarkeit von Lichtfunktionen einer Fahrzeugleuchte 02, insbesondere Heckleuchte für ein Kraftfahrzeug.

Dadurch können vermittels der Erfindung Fahrzeugleuchten 02 und damit deren Bauraumanforderungen frei von einer Verletzung der einschlägigen Regelungen und Vorschriften bezüglich Flächenanforderungen deutlich verkleinert werden, ohne dass die für die einzelnen Lichtfunktionen zur Verfügung stehenden, von den anderen Verkehrsteilnehmern wahrnehmbaren Mindestleuchtflächen unterschritten werden.

Die Projektionsfläche 07 kann Teil der Fahrzeugleuchte 02 sein, oder sie kann eine Karosseriefläche umfassen. Auch Kombinationen sind denkbar.

So kann die Projektionsfläche 07 eine außerhalb der Lichtscheibe 04 befindliche Partie der Fahrzeugleuchte 02 umfassen, beispielsweise eine unmittelbar an die Lichtscheibe 04 angrenzende, außerhalb des Leuchteninnenraums 05 liegende und in Richtung einer dem Leuchteninnenraum 05 abgewandten Außenseite der Lichtscheibe 04 orientierte Fläche des Leuchtengehäuses 03.

Eine solche außerhalb des Leuchteninnenraums 05 liegende und in Richtung einer dem Leuchteninnenraum 05 abgewandten Außenseite der Lichtscheibe 04 orientierte Fläche des Leuchtengehäuses 03 kann unmittelbar an die Lichtscheibe 04 der Fahrzeugleuchte 02 angrenzen, wie dies in Fig. 1 dargestellt ist.

Alternativ oder zusätzlich kann eine solche außerhalb des Leuchteninnenraums 05 liegende und in Richtung einer dem Leuchteninnenraum 05 abgewandten Außenseite der Lichtscheibe 04 orientierte Fläche des Leuchtengehäuses 03 von der Lichtscheibe 04 der Fahrzeugleuchte 02 beabstandet angeordnet sein.

Die außerhalb der Lichtscheibe 04 befindliche Partie kann eine zusammenhängende in Richtung einer dem Leuchteninnenraum 05 abgewandten Außenseite der Lichtscheibe 04 orientierte Fläche des Leuchtengehäuses 03 umfassen. Alternativ oder zusätzlich kann sie mehrere unzusammenhängende, in Richtung einer dem Leuchteninnenraum 05 abgewandten Außenseite der Lichtscheibe 04 orientierte Flächen des Leuchtengehäuses 03 umfassen.

Alternativ oder zusätzlich kann die Projektionsfläche 07 wie in Fig. 1 dargestellt eine außerhalb der Lichtscheibe 04 befindliche Partie einer Außenfläche eines die Fahrzeugpartie umfassenden Fahrzeugs umfassen. Hierbei kann es sich beispielsweise um eine Karosserieaußenfläche 08 handeln.

Die Karosserieaußenfläche 08 kann unmittelbar an die Fahrzeugleuchte 02 angrenzen, oder sie kann von der Fahrzeugleuchte 02 beabstandet angeordnet sein. Die Partie kann eine zusammenhängende Karosserieaußenfläche 08 umfassen.

Alternativ oder zusätzlich kann sie mehrere unzusammenhängende Karosserieaußenfläche 08 umfassen.

Eine vorteilhafte Weiterbildung der Fahrzeugpartie 01 kann vorsehen, dass die Projektionsfläche 07 Mittel zur Lichtumlenkung gemäß vorgegebener Lichtverteilung umfasst.

Geeignete, auf der Projektionsfläche 07 anordbare Mittel können beispielsweise Facetten und/oder Mikrofacetten sein. Diese können zum Erhalt einer gewünschten für eine Lichtfunktion vorgegebenen Lichtverteilung innerhalb einer beispielsweise homogenen Streubreite ihrer Verteilung so angeordnet sein, dass bezogen auf die gesamte Projektionsfläche 07 jeder mehrere Facetten umfassende Projektionsflächenabschnitt die Lichtverteilung zu erfüllen vermag. Damit trägt jeder Projektionsflächenabschnitt gleichermaßen zur Erfüllung der Lichtverteilung bei.

Alternativ können die Facetten innerhalb vorgegebener Projektionsflächenabschnitte gleich orientiert sein. Hierdurch vermögen nur mehrere Projektionsflächenabschnitte gemeinsam die Lichtverteilung zu erfüllen. Dabei trägt jeder Projektionsflächenabschnitt zur Erfüllung nur eines Teils der Lichtverteilung bei, und zwar desjenigen Teils, in welche Richtung seine Facetten das auf ihn eintreffende Licht der Projektionsmittel umlenken.

Um einen hohen Wirkungsgrad der Lichtumlenkung zu erhalten umfasst die Projektionsfläche 07 vorteilhaft eine mit einer Beschichtung mit einem geringen Absorptionsgrad versehene Oberfläche. Denkbar ist beispielsweise ein weißer Farbanstrich oder eine Verspiegelung.

Um einen noch höheren Wirkungsgrad der Lichtumlenkung zu erhalten umfasst die Projektionsfläche 07 besonders vorteilhaft eine mit einer Beschichtung mit einem hohen Reflexionsgrad von beispielsweise über 90% für auf sie treffendes Licht im für das menschliche Auge sichtbaren Teil des elektromagnetischen Spektrums versehene Oberfläche. Hierfür eignet sich insbesondere eine eine Verspiegelung besorgende Beschichtung.

Eine vorteilhafte Weiterbildung der Fahrzeugpartie 01 sieht vor, dass die Projektionsfläche 07 mit einer Beschichtung versehen ist, die einen hohen Selbstreinigungseffekt gegenüber aus der Umgebung auf sie eingebrachten Verschmutzungen aufweist.

Einen hohen Selbstreinigungseffekt weist beispielsweise der so genannte Lotoseffekt auf.

Beispiele für Beschichtungen mit hohem Selbstreinigungseffekt sind hydrophobe Beschichtungen, wie dies beispielsweise auch beim Lotoseffekt zum Tragen kommt. Bei hydrophoben Beschichtungen ist der Kontaktwinkel zwischen der mit der Beschichtung versehenen Oberfläche und einem Wassertropfen größer als 90°. Die Adhäsion zwischen der mit der Beschichtung versehenen Oberfläche und einem Wassertropfen ist dabei so gering, dass das Wasser leicht abperlen kann. Aufliegende Schmutzpartikel - die ebenfalls nur eine kleine Kontaktfläche besitzen - werden dadurch mitgeführt und weggespült. Selbst hydrophobe Schmutzpartikel werden von der mit der Beschichtung versehenen Oberfläche abgewaschen, weil deren Adhäsion zur Beschichtung geringer ist als zum Wassertropfen.

Die Projektionsfläche 07 kann allein oder in Kombination mit einer innerhalb des Leuchteninnenraums 05 angeordneten, beispielsweise ein oder mehrere Teile der Projektionsmittel 06 umfassenden Teil-Leuchtfläche 09 die Flächenanforderungen für eine oder mehrere Lichtfunktionen erfüllen.

Diese Teil-Leuchtfläche 09 kann von außerhalb des Leuchteninnenraums 05 betrachtet einen Teil oder die gesamte Lichtscheibe 04 der Fahrzeugleuchte 02 einnehmen, wie in Fig. 2 und Fig. 3 dargestellt.

Fig. 1 zeigt den erfindungsgemäßen Aufbau in einer Schnittdarstellung. In der Fahrzeugleuchte 02 befinden sich beispielsweise ein oder mehrere Projektoren 60 als Teil der Projektionsmittel 06, die elektromagnetische Strahlung, beispielsweise Licht in einem für das menschliche Auge sichtbaren Teil des elektromagnetischen Spektrums auf von der Projektionsfläche 07 umfasste, umliegende Bereiche der Fahrzeugleuchte 02 strahlen. Die elektromagnetische Strahlung, beispielsweise das sichtbare Licht, wird an diesen außenliegenden, von der Projektionsfläche 07 umfassten Bereichen umgelenkt und/oder gestreut und/oder in anderer geeigneter Weise verteilt, und ist so Teil der Lichtfunktion, wodurch diese Bereiche unmittelbar zur Erfüllung der Lichtfunktion beitragen. Eine Hauptrichtung, in die diese Bereiche das Licht umlenken, verläuft beispielsweise horizontal parallel zur Längsachse eines mit der Fahrzeugpartie 01 ausgestatteten Fahrzeugs.

Fig. 2 zeigt den erfindungsgemäßen Aufbau aus Fig. 1 in einer Draufsicht entlang einer Blickachse gesehen. Beispielsweise verläuft die Blickachse horizontal parallel zur Längsachse eines mit der Fahrzeugpartie 01 ausgestatteten Fahrzeugs. Eine Gesamt-Leuchtfläche setzt sich aus einer in der Draufsicht die Lichtscheibe 04 ausleuchtenden, im Leuchteninnenraum 05 beherbergten Teil-Leuchtfläche 09 und der oder den von den Projektionsmitteln 06 zur Erfüllung der Flächenanforderungen an eine momentan benötigte Lichtfunktion bedarfsweise angestrahlten, von der Projektionsfläche 07 umfassten Teil-Leuchtflächen 10 zusammen, von denen sich letztere im vorliegenden Ausführungsbeispiel ober- und unterhalb der Fahrzeugleuchte 02 befinden.

In Fig. 2 werden die zwei zusätzlichen, durch von der Projektionsfläche 07 umfasste Bereiche gebildeten Teil-Leuchtflächen 10 deutlich.

Selbstverständlich können sich von der Projektionsfläche 07 umfasste Teil-Leuchtflächen 10 alternativ oder zusätzlich rechts und/oder links der Fahrzeugleuchte 02 befinden, sowie alternativ oder zusätzlich nur oberhalb oder nur unterhalb der Fahrzeugleuchte 02. Darüber hinaus sind beliebige Kombinationen der Anordnungen von Teil-Leuchtflächen 10 in Bezug auf eine Fahrzeugleuchte 02 möglich.

Wie bereits voranstehend in Zusammenhang mit einer Anstrahlung der Projektionsfläche 07 mit Licht in einem für das menschliche Auge sichtbaren Teil des elektromagnetischen Spektrums angedeutet, ist alternativ oder zusätzlich denkbar, dass in die Projektionsfläche 07 ein Fluoreszenzmaterial eingebracht ist und/oder die Projektionsfläche 07 mit einer Beschichtung versehen ist, in die ein Fluoreszenzmaterial eingebracht ist, welches Fluoreszenzmaterial durch Bestrahlung mit von einer im Leuchteninnenraum 05 beherbergten, von den Projektionsmitteln 06 umfassten Anregungslichtquelle abgestrahltem Anregungslicht Fluoreszenzlicht in einer für eine Lichtfunktion vorgesehenen Fluoreszenzlichtfarbe abstrahlt.

Hierdurch können die Projektionsmittel 06 für den Menschen unsichtbare Strahlung aussenden, wie beispielsweise UV-Strahlung. Diese Strahlung wiederum kann allgemein unter dem Begriff Fluoreszenzmittel zusammengefasste fluoreszierende oder ähnliche Materialien im Bereich der Projektionsfläche 07 außerhalb des vom Leuchtengehäuse 03 und der Lichtscheibe 04 ganz oder teilweise umschlossenen Leuchteninnenraums 05 anregen. Diese außerhalb des Leuchteninnenraums 05 liegenden, von der Projektionsfläche 07 umfassten Leuchtflächen leuchten dann im sichtbaren Wellenlängenbereich. Die fluoreszierenden Materialien können so gewählt werden, dass sie nahezu die gleiche oder die gleiche Lichtfarbe der Lichtfunktion in der Fahrzeugleuchte 02 haben, sodass auch ein ähnlicher oder gleicher Farbeindruck für den Betrachter entsteht und die gesetzlichen Anforderungen an den Farbort eingehalten werden.

Wichtig ist hervorzuheben, dass die Teil-Leuchtflächen 10, die durch die Projektion entstehen auch nachweislich entlang der Fahrzeuglängsachse gesehen leuchten und nicht nur irgendwie glimmen. So werden in aktuellen Fahrzeugleuchten auch hochstreuende SL-Optiken eingesetzt, wie etwa df23-Streuscheiben, welche ohne Einschränkungen zu den Leuchtflächen von BRL und/oder FRA dazugerechnet werden dürfen. Somit stellt diese Anforderung eine geringe Einschränkung für die Umsetzung der Erfindung in der Serie dar.

Werden die Flächenanforderungen an eine Mindestleuchtfläche für eine Lichtfunktion durch mehrere Teil-Leuchtflächen 09, 10 inner- und/oder außerhalb des Leuchteninnenraums 05 erfüllt, so beträgt der Abstand zwischen zwei Teil-Leuchtflächen 09, 10 75mm oder weniger, ganz gleich, ob es sich hierbei um zwei durch die Projektionsfläche 07 gebildete oder von dieser umfasste Teil-Leuchtflächen 10 und/oder um eine durch die Projektionsfläche 07 gebildete oder von dieser umfasste Teil-Leuchtfläche 10 und eine innerhalb des Leuchteninnenraums 05 angeordnete Teil-Leuchtfläche 09, und/oder um zwei innerhalb des Leuchteninnenraums 05 angeordnete Teil-Leuchtflächen 09 handelt.

Da meist Fahrzeugleuchten 02 mit einer weltweiten Zulassung verwirklicht werden sollen, weil aus Gründen vereinfachter Herstellung, Lieferketten und Austauschbarkeit möglichst viele Gleichteile verwendet werden sollen, ist es vorteilhaft den angegebenen Abstand nicht zu überschreiten. So ist beispielsweise im Geltungsbereich nach United Nations Economic Commission for Europe (UN/ECE) ein Abstand von höchstens 75 mm zwischen der gleichen Lichtfunktion beitragenden oder die selbe Lichtfunktion verwirklichenden Teil-Leuchtflächen 09, 10 zu berücksichtigen. Der Abstand der Teil-Leuchtflächen 09, 10 ist daher geringer wie bei den Vorgaben nach den FMVSS, aber immer noch relativ groß für den erfindungsgemäßen Aufbau.

Wichtig ist an dieser Stelle auch zu erwähnen, dass im Rahmen einer integrativen Betrachtung der vom Gesetzgeber vorgegebene Maximallichtwert der Lichtfunktion nicht überschritten werden darf und der Farbort gesamtheitlich eingehalten werden muss.

Die sich durch die Projektionsfläche 07 oder durch eine Kombination von Projektionsfläche 07 und einer innerhalb des Leuchteninnenraums 05 angeordneten Teil-Leuchtfläche 09 ergebende Gesamt-Leuchtfläche muss nicht zwingend aus einer zusammenhängenden Fläche bestehen, sondern kann auch aus mehreren auch als Teil-Leuchtflächen 09, 10 bezeichneten Einzelflächen bestehen (Fig. 3).

Vorteilhaft ist es möglich, mehrere Zulassungen für eine Lichtfunktion, wie etwa mehrere SL-Zulassungen, in einer Fahrzeugleuchte 02 zu verwirklichen. Unter bestimmten Voraussetzungen weisen derartige Fahrzeugleuchten 02 andere Lichtsignaturen für eine bestimmte Lichtfunktionen auf. Zum Beispiel kann sich die Schlusslichtsignatur bei gleichzeitigem BRL-Betrieb ändern.

Hierdurch entsteht eine prägnanter Wechsel zwischen Rück- und Bremslicht. Sichtbar wird der sich hierdurch ergebende Effekt der umschaltenden Schluss- und Bremslichtsignatur nachts bei aktivem Rücklicht: Beim Bremsen schaltet eine beispielsweise horizontale Rücklichtsignatur in eine beispielsweise senkrecht angeordnete Bremslichtsignatur um. Optisch wirkt es wie ein Umklappen der horizontalen Schluss- in die vertikale Bremslichtsignatur. Der Signalwechsel unterstreicht die Erkennbarkeit der Bremse und erhöht so die Verkehrssicherheit.

Zur Verwirklichung solcher sich im Betrieb beispielsweise durch Veränderung der Geometrie und/oder Orientierung der Umrisse ändernder, beispielsweise durch Geometrie und/oder Orientierung der Umrisse gebildeter so genannter Lichtsignaturen können die Projektionsmittel 06 die Projektionsfläche 07 in Abhängigkeit von der oder den momentan benötigten und/oder zu verwirklichenden Lichtfunktionen in unterschiedlicher Ausdehnung und/oder Geometrie für die einzelnen momentan benötigten Lichtfunktionen mit Licht anstrahlen.

So können verschiedene geometrische Umrisse beim Wechsel zwischen zwei Lichtfunktionen gleicher Lichtfarbe vorgesehen sein, um das Augenmerk des Betrachters - typischerweise eines Lenkers eines anderen am Straßenverkehr teilnehmenden Fahrzeugs - auf sich zu ziehen. Hierdurch wird die Wahrnehmbarkeit der betroffenen Lichtfunktionen nachweislich gesteigert und damit einhergehend die Verkehrssicherheit nachhaltig erhöht.

Eine vorteilhafte Ausgestaltung der Erfindung sieht vor, dass die Anstrahlung der Projektionsfläche 07 mit Licht der Projektionsmittel 06 zumindest in ihrer Geometrie individuell veränderbar ist.

Hierdurch wird eine Ausführung geschaffen, bei welcher beispielsweise ein Endkunde eine bestimmte gewünschte Lichtsignatur einstellen kann. Die Erfindung bietet hiernach weite Möglichkeiten für Individualisierungszwecke durch eine individuelle, flexibel wählbare Lichtsignatur nach Kundenwunsch.

Ein sich hierdurch ergebender Vorteil ist, dass ohne den Bedarf konstruktiver Änderungen Wünsche nach verschiedenen Lichtsignaturen erfüllt werden können.

Vorteilhaft umfassen die Projektionsmittel 06 ein flexibles optisches System, welches sowohl unterschiedliche Lichtsignaturen, Piktogramme, Animationen und/oder Videos, wie etwa bewegte Bilder darstellen kann. Damit wird der Funktionsumfang der Erfindung wesentlich erweitert. Zum Einsatz können hier insbesondere Aufbauten gebracht werden, wie sie aus Aufbauten mit Mikrospiegelarrays, so genannten Digital Micromirror Device, kurz DMD bekannt sind.

Eine besonders vorteilhafte Ausgestaltung der Erfindung sieht vor, dass es sich bei zumindest einer zur Erfüllung wenigstens einer gesetzlich zur Teilnahme am Straßenverkehr vorgeschriebenen Lichtfunktion um eine dynamische Lichtfunktion handelt. Um eine dynamische Lichtfunktion zu verwirklichen, ist erfindungsgemäß vorgesehen, die Projektionsfläche 07 mit Licht der Projektionsmittel 06 in einer sich zeitlich verändernden Ausdehnung von gar keiner oder einer nur sehr kleinen Ausdehnung mindestens bis hin zur die vorgegebene Flächenanforderung für die Lichtfunktion erfüllenden Ausdehnung oder sogar bis hin zu einer darüber hinaus gehenden Ausdehnung anzustrahlen.

Bekannt ist, dass Leuchtanzeigen, beispielsweise in einem Armaturenbrett eines Fahrzeugs angezeigte Warnanzeigen, die mit ihrem Aufleuchten dem Betrachter entgegen zu springen scheinen, durch ihre scheinbare Bewegung auf den Betrachter zu von diesem besonders gut wahrgenommen werden und diesen alarmieren, auch wenn dessen Blick nicht unmittelbar auf einen Bereich gerichtet ist, in dem die Warnanzeige angezeigt wird. Sie haben daher eine erhöhte Wahrnehmungskraft zur Folge.

Um die Wahrnehmbarkeit beziehungsweise Wahrnehmungskraft von Lichtfunktionen einer Fahrzeugleuchte für andere Verkehrsteilnehmer zu erhöhen ist bekannt, diese innerhalb der gesetzlich zugelassenen Grenzen aufleben zu lassen.

Ein bekanntes Beispiel sind so genannte dynamische Lichtfunktionen, bei denen die vom Gesetzgeber eingeräumte Zeit, die eine Glühlampe als eine gesetzlich erlaubte Lichtquelle eines zur Erfüllung einer Lichtfunktion vorgesehenen Leuchtmittels benötigt, um ihre volle Leuchtstärke zu erreichen, genutzt wird, um einen visuellen Effekt zu erzielen.

Ein Beispiel eines solchen visuellen Effekts ist das Wischen in Richtung der Richtung einer beabsichtigten Fahrtrichtungsanzeige bei einer Wiederholblinklichtfunktion eines Fahrtrichtungsanzeigers.

Eine solche dynamische Lichtfunktion wird durch ein Leuchtmittel mit mehreren, nacheinander der Reihe nach angehenden Lichtquellen verwirklicht.

Untersuchungen haben gezeigt, dass hierdurch die Verkehrssicherheit erhöht wird, da durch das Wischen bereits bei Beginn der Wahrnehmung der Lichtfunktion durch andere Verkehrsteilnehmer die durch die Lichtfunktion angezeigte beabsichtigte Fahrtrichtungsänderung von den anderen Verkehrsteilnehmern erkannt wird.

Eine vorteilhalfte Weiterbildung der Fahrzeugpartie 01 sieht vor, dass die Projektionsmittel 06 einen Laserscanner und/oder ein Liquid Crystal Display (LCD) umfassen.

Eine weitere Möglichkeit zur intelligenten Ausleuchtung der Straße und/oder in diesem Fall der Leuchtenumgebung innerhalb der Fahrzeugpartie 01 am Fahrzeug, wie etwa eines Fahrzeugblechs, ist ein Laserscanner, der die ganz oder teilweise auszuleuchtende Projektionsfläche 07 wie der Elektronenstrahl eines Röhrenfernsehers abtastet. Zur Ablenkung des Lichts kann ein beweglicher Spiegel eingesetzt werden.

Eine weitere Möglichkeit ist die Integration eines Liquid Crystal Displays (LCD) in die Fahrzeugleuchte 02 als Teil der Projektionsmittel 06, um die in der Umgebung der von der Lichtscheibe 04 abgedeckten Lichtöffnung Fahrzeugleuchte 02 befindliche Projektionsfläche 07 flexibel beleuchten zu können. Ein solcher Aufbau ist beispielsweise in Verbindung mit einem LED-Scheinwerfer denkbar.

Die Fahrzeugpartie 01 kann alternativ oder zusätzlich einzelne oder eine Kombination mehrerer einleitend in Verbindung mit dem Stand der Technik und/oder in einem oder mehreren der zum Stand der Technik erwähnten Dokumente und/oder in der noch folgenden Beschreibung erwähnte Merkmale aufweisen.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Ansprüchen beinhaltet, auch wenn dieses Merkmal oder diese Kombination selbst nicht explizit in den Ansprüchen oder Ausführungsbeispielen angegeben ist.

Die Erfindung ist insbesondere im Bereich der Herstellung von Fahrzeugleuchten, insbesondere Kraftfahrzeugleuchten, wie etwa - frei von einem Anspruch auf Vollständigkeit - Heck- und/oder Begrenzungsleuchten, hochgesetzte dritte Bremsleuchten, Scheinwerfer, gewerblich anwendbar.

Die Erfindung wurde unter Bezugnahme auf bevorzugte Ausführungsformen beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Fahrzeugpartie
- 02: Fahrzeugleuchte
- 03: Leuchtengehäuse
- 04: Lichtscheibe
- 05: Leuchteninnenraum
- 06: Projektionsmittel
- 07: Projektionsfläche
- 08: Karosserieaußenfläche
- 09: Teil-Leuchtfläche (Leuchteninnenraum)
- 10: Teil-Leuchtfläche (Projektionsfläche)

- 60: Projektor

## Patentansprüche

1. Fahrzeugpartie (01) umfassend mindestens eine Fahrzeugleuchte (02) mit einem von einem Leuchtengehäuse (03) mit mindestens einer von wenigstens einer Lichtscheibe (04) abgedeckten Lichtöffnung umschlossenen Leuchteninnenraum (05), welcher Projektionsmittel (06) zur Projektion zumindest einer zur Erfüllung wenigstens einer gesetzlich zur Teilnahme am Straßenverkehr vorgeschriebenen Lichtfunktion beherbergt, **gekennzeichnet durch** eine außerhalb des Leuchteninnenraums (05) angeordnete Projektionsfläche (07), welche mit Licht der Projektionsmittel (06) in einer vorgegebene Flächenanforderung für die jeweilige Lichtfunktion erfüllenden Ausdehnung angestrahlt wird, und welche das Licht der Projektionsmittel (06) gemäß einer für die jeweilige Lichtfunktion vorgegebenen Lichtverteilung umlenkt.

2. Fahrzeugpartie nach Anspruch 1, wobei die Projektionsfläche (07) eine außerhalb der Lichtscheibe (04) befindliche Partie der Fahrzeugleuchte (02) umfasst.

3. Fahrzeugpartie nach Anspruch 1 oder 2, wobei die Projektionsfläche (07) eine außerhalb der Lichtscheibe (04) befindliche Partie einer Außenfläche eines die Fahrzeugpartie (01) umfassenden Fahrzeugs umfasst.

4. Fahrzeugpartie nach Anspruch 1, 2 oder 3, wobei die Projektionsfläche (07) Mittel zur Lichtumlenkung gemäß vorgegebener Lichtverteilung umfasst.

5. Fahrzeugpartie nach einem der Ansprüche 1 bis 4, wobei die Projektionsfläche (07) eine Beschichtung mit einem geringen Absorptionsgrad umfasst.

6. Fahrzeugpartie nach einem der voranstehenden Ansprüche, wobei die Projektionsfläche (07) eine Beschichtung mit einem hohen Reflexionsgrad umfasst.

7. Fahrzeugpartie nach einem der voranstehenden Ansprüche, wobei die Projektionsfläche (07) mit einer Beschichtung versehen ist, die einen hohen Selbstreinigungseffekt aufweist.

8. Fahrzeugpartie nach einem der voranstehenden Ansprüche, wobei die Projektionsfläche (07) allein oder in Kombination mit einer innerhalb des Leuchteninnenraums (05) angeordneten Teil-Leuchtfläche (09) die Flächenanforderungen für eine oder mehrere Lichtfunktionen erfüllt.

9. Fahrzeugpartie nach einem der voranstehenden Ansprüche, wobei in die Projektionsfläche (07) ein Fluoreszenzmaterial eingebracht ist und/oder die Projektionsfläche (07) mit einer Beschichtung versehen ist, in die ein Fluoreszenzmaterial eingebracht ist, welches durch Bestrahlung mit von einer im Leuchteninnenraum (05) beherbergten, von den Projektionsmitteln (06) umfassten Anregungslichtquelle abgestrahltem Anregungslicht Fluoreszenzlicht in einer für eine Lichtfunktion vorgesehenen Fluoreszenzlichtfarbe abstrahlt.

10. Fahrzeugpartie nach einem der voranstehenden Ansprüche, wobei der Abstand zwischen zwei von der Projektionsfläche (07) umfassten und/oder innerhalb des Leuchteninnenraums (05) angeordneten Teil-Leuchtflächen (09, 10) 75 mm oder weniger beträgt.

11. Fahrzeugpartie nach einem der voranstehenden Ansprüche, wobei die Projektionsmittel (06) die Projektionsfläche (07) in Abhängigkeit von der oder den momentan benötigten und/oder zu verwirklichenden Lichtfunktionen in unterschiedlicher Ausdehnung und/oder Geometrie für die einzelnen momentan benötigten Lichtfunktionen mit Licht anstrahlen.

12. Fahrzeugpartie nach einem der voranstehenden Ansprüche, wobei die Anstrahlung der Projektionsfläche (07) mit Licht der Projektionsmittel (06) zumindest in ihrer Geometrie individuell veränderbar ist.

13. Fahrzeugpartie nach einem der voranstehenden Ansprüche, wobei die Projektionsmittel (06) ein flexibles optisches System umfassen, welches sowohl unterschiedliche Lichtsignaturen, Piktogramme, Animationen und/oder Videos darstellen kann.

14. Fahrzeugpartie nach einem der voranstehenden Ansprüche, wobei es sich bei zumindest einer zur Erfüllung wenigstens einer gesetzlich zur Teilnahme am Straßenverkehr vorgeschriebenen Lichtfunktion um eine dynamische Lichtfunktion handelt, wobei die Projektionsfläche (07) mit Licht der Projektionsmittel (06) in einer sich zeitlich verändernden Ausdehnung bis hin zur die vorgegebene Flächenanforderung für die Lichtfunktion erfüllenden Ausdehnung angestrahlt wird.

15. Fahrzeugpartie nach einem der voranstehenden Ansprüche, wobei die Projektionsmittel (06) einen Laserscanner und/oder ein Liquid Crystal Display (LCD) umfassen.
